(19) **Europäisches Patentamt**
**European Patent Office**
**Office européen des brevets**

(11) **EP 2 055 056 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(21) Anmeldenummer: **07819961.9**

(22) Anmeldetag: **22.08.2007**

(51) Int Cl.:
**H04L 12/56** (2006.01)   **H04L 12/28** (2006.01)

(86) Internationale Anmeldenummer:
**PCT/EP2007/058713**

(87) Internationale Veröffentlichungsnummer:
**WO 2008/031698 (20.03.2008 Gazette 2008/12)**

(54) **VERFAHREN UND NETZWERKKNOTEN ZUM ROUTEN VON DATENPAKETEN IN KOMMUNIKATIONSNETZEN**

METHOD AND NETWORK NODE FOR ROUTING DATA PACKETS IN COMMUNICATION NETWORKS

PROCÉDÉ ET NOEUD DE RÉSEAU PERMETTANT D'ACHEMINER DES PAQUETS DE DONNÉES DANS DES RÉSEAUX DE COMMUNICATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **24.08.2006 DE 102006039635**

(43) Veröffentlichungstag der Anmeldung:
**06.05.2009 Patentblatt 2009/19**

(73) Patentinhaber: **SIEMENS AKTIENGESELLSCHAFT**
**80333 München (DE)**

(72) Erfinder: **BAHR, Michael**
**81827 München (DE)**

(74) Vertreter: **Feichtner, Andreas**
**Siemens AG**
**CT IP**
**Postfach 22 16 34**
**80506 München (DE)**

(56) Entgegenhaltungen:
**WO-A-2005/062554    WO-A-2005/091576**
**US-A1- 2005 094 594**

**Beschreibung**

Die Erfindung betrifft ein Verfahren zum Routen von Daten in Kommunikationsnetzen gemäß dem Oberbegriff des Anspruchs 1 sowie einen Netzwerkknoten zum Routen von Daten in Kommunikationsnetzen gemäß dem Gattungsbegriff des Anspruchs 18.

Es ist bekannt, dass zur Ermittlung des Wegs eines Datenpaketes Netzwerkknoten entscheiden, auf welchem Weg ein Datenpaket weiterzusenden ist, damit diese beispielsweise auf einem möglichst schnellen Weg zu einem empfangenden Netzwerkknoten gelangen. Diese Vorgehensweise ist als so genanntes Routing bekannt. Verschiedene Ansätze zur Umsetzung des Routing mündeten in verschiedenen Routing-Protokollen.

Gemäß solchen Routing-Protokollen werden ermittelte Routen häufig mit einer Lebenszeit ("Lifetime"), d.h. mit einem Timeout derart verbunden, dass diese Routen bei Nichtbestätigung der Route ohne zusätzliche Steuerpakete aus Routing-Tabellen nach Ablauf eines mit der Lebenszeit gesetzten Timers entfernt werden.

In reaktiven Routing-Protokollen, die für mobile so genannte Ad-hoc-Netze, insbesondere drahtlose Mesh-Netze (wireless mesh networks), eingesetzt werden und die auf dem Distance-Vector-Verfahren beruhen, wie beispielsweise das so genannte "Ad hoc On-Demand Distance Vector" (AODV) Protokoll (vgl. Perkins, C. E., Belding-Royer, E. M., and Das, S. R. "Ad hoc On-Demand Distance Vector (AODV) Routing".IETF Experimental RFC 3561, July 2003.AODV RFC) oder das "Hybrid Wireless Mesh Protocol" (HWMP) Protokoll (vgl. IEEE P802.11sm/D0.03, Draft amendment to standard IEEE 802.11 TM: ESS Mesh Networking. IEEE, August 2006, work in Progress), wird ebenso vorgegangen.

Üblicher Weise ist eine Route in einem Netz durch entsprechende Einträge in Routing-Tabellen von Netzwerkknoten definiert. Jeder Netzwerkknoten auf dem Pfad von einem Quellknoten (Source) zu einem Zielknoten (Destination) hat in seiner Routing-Tabelle einen Eintrag für den Zielknoten, der den nächsten so genannten Hop, d.h. den nächsten anzusteuernden Netzwerkknoten auf der Route zum Zielknoten D angibt.

Bei den Protokollen AODV und HWMP beginnt die reaktive Routensuche mit einem netzweiten Broadcast einer so genannten "Route Request" Nachricht (RREQ), die so genannte "*reverse routes*" von allen Netzwerkknoten zum Quellknoten aufbaut. Der Zielknoten wird ebenfalls ein oder mehrere RREQs erhalten. Jedes erhaltene RREQ-Paket steht für eine mögliche Route zum Quellknoten. Der Zielknoten schickt auf der ausgewählten reverse route eine "Route Reply" Nachricht (RREP) per Unicast, die die so genannte "*forward route*" in allen Netzwerkknoten auf der ausgewählten Route einträgt.

Ein Problem bei dieser Verfahrensweise besteht darin, dass die Lebenszeit der durch die RREQs erzeugten reverse routes ausreichend lang sein muss, da die reverse routes auch noch existieren müssen, wenn das RREP an den Originatorknoten S zurückgeschickt wird und S anfängt die Daten an D zu senden.

Aus der US 2005/094594 A1 ist ein Verfahren sowie eine Anordnung bekannt, bei der das aktuell gültige Ausmaß eines Netzwerks zum Zweck der Optimierung der Routing Prozedur ermittelt wird/wobei hierzu die Lebensdauer von Randknoten herangezogen wird.

Die WO 2005/091576 A stellt ein Verfahren und eine Anordnung dar, bei denen aktuelle Zustandsdaten des Netzwerks, wie zum Beispiel die Batterielebensdauer, für die Bestimmung einer optimalen Route herangezogen werden.

Aus der WO2005/062554 A ist ein Verfahren sowie eine Anordnung zur Steigerung der Effizienz des Routings bekannt, bei der ein Routen von Datenpaketen auf Grundlage des Status eider aktuellen Verbindung ("link status") erfolgt.

Die der Erfindung zugrunde liegende Aufgabe ist es, ein Verfahren sowie eine Anordnung anzugeben, welche die Nachteile des Standes der Technik beheben.

Gelöst wird diese Aufgabe ausgehend von dem verfahren gemäß dem Gattungsbegriff des Anspruchs 1 durch dessen kennzeichnende Merkmale, sowie ausgehend von dem Netzwerkknoten gemäß dem Gattungsbegriff des Anspruchs 18.

Bei dein erfindungsgemäßen Verfahren zum Routen von Datenpaketen in einem, insbesondere drahtlosen aus einer Vielzahl von Netzwerkknoten gebildeten Kommunikationsnetz, werden zur Übertragung von Datenpraketen von einem als Ursprung der Datenpakete fungierenden ersten Netzwerkknoten zu einem als Senke der Datenpakete fungierenden zweiten Netzwerkknoten, die Datenpakete unter Zuhilfenahme mindestens eines weiteren zum Ursprungskhoten disjunkten Netzwerkknotens (A, B, G, D) des Kommunikationsnetzes übermittelt, ausgehend vom Ursprungsknoten zumindest an den weiteren Netzwerkknoten eine erste Netzwerknachricht derart übermittelt wird, dass sie jedem weiteren Netzwerkknoten sukzeassive weitergeleitet wird, bis der weitere Netzwerkknoten dem Senkenknoten (D) entspricht, wobei die erste Netzwerknachricht einen ihr zugeordneten Wert einer ersten Gültigkeitsdauer enthält, der jeweilige weitere Netzwerkknoten auf Grundlage der ersten Nachricht eine Routenin-formation derart vorhält, dass eine erste Information über einen nächsten Netzwerkknoten auf dem Weg zum Ursprungsknoten sowie den Wert der ersten Gültigkeitsdauer im aktuellen weiteren Netzwerkknoten temporär gespeichert wird, der Wert der jeweiligen ersten Gültigkeitsdauer, derart abgespeichert wird, dass alle ersten Informationen zumindest so lange abgespeichert bleiben, bis eine vom Senkenknoten gesendete, die erste Netzwerknachricht bestätigende, zweite Netzwerknachricht vom Ursprungsknoten empfangen worden ist.

Durch dieses Verfahren ist gewährleistet, dass für alle an einer Reverse Route beteiligten Netzwerkknoten eine Lebenszeit verwendet wird, die frühzeitigen Timeout der jeweiligen Reverse Route in einem der Netzwerkknoten oder gar entstehende Lücken vermeidet. Ferner kann der Wert einer ersten Gültigkeitsdauer in einem Netzwerkknoten auch als Zeitpunkt dargestellt werden. Hiermit ist es vorteilhaft auch möglich, dass der Senkenknoten ohne Zwischenknoten erreicht wird. Es funktioniert auch, wenn nur insgesamt zwei Knoten, also nur Quelle und Senke vorhanden sind.

Ferner ist durch das erfindungsgemäße Verfahren gewährleistet, dass für bzw. mit jedem Route Request auch unterschiedliche Lebenszeiten konfiguriert werden können, so dass eine bessere Anlassung an aktuelle Eigenschaften des Netzes bzw. einzelner Netzwerkknoten hiervon erfolgen kann.

Vorzugsweise wird dabei der Wert der ersten Gültigkeitsdauer derart abgespeichert, dass dies nur dann unterbleibt, wenn bereits ein größerer Wert im aktuellen Netzwerkknoten abgespeichert ist. So können möglicher Weise besser angepasste höhere Werte erhalten bleiben und die erfindungsgemäße Sicherung einer minimalen Lebenszeit, die schnelle Timeouts oder Lücken in der Route vermeidet, bleibt gewährleistet.

Von Vorteil ist es auch, wenn das erfindungsgemäße Verfahren derart weitergebildet wird, dass der Wert der ersten Gültigkeitsdauer dynamisch generiert wird. Hierdurch ist gewährleistet, dass die minimale Lebenszeit optimal auf die aktuellen Netzeigenschaften angepasst ist, so dass der erfindungsgemäße Vorteil mit einem hohen Maß an Zuverlässigkeit erzielt wird.

Eine weitere vorteilhafte Ausgestaltung des Verfahrens ist gegeben, wenn das Generieren des Wertes gemäß dem AODV Protokoll durch die Funktion

$\max(ExistingLifetime, MinimalLifetime)$

mit

$$MinimalLifetime = (current\_time + 2*NET\_TRAVERSAL\_TIME -$$

$$2*HopCount*NODE\_TRAVERSAL\_TIME)$$

definiert ist, wobei mit

| | |
|---|---|
| ExistingLifetime | die Lebenszeit einer bereits existierenden Route zum Ursprungsknoten, |
| MinimalLifetime | eine Schätzung der mindestens zu setzenden Lebenszeit, |
| current_time | die aktuelle Systemzeit, |
| NET_TRAVERSAL_TIME | einen ersten je Netzwerkknoten einstellbaren Parameter, der eine Schätzung der maximalen Zeitdauer des Verschickens eines RREQ durch das Netz darstellt, |
| HopCount | die Anzahl der durchlaufenen weiteren Netzwerkknoten des RREQ-Paketes bis zum einschließlich aktuellen Netzwerkknoten, die dem aktualisierten Feld rreq.hopcount des RREQ entnommen werden kann, |
| NODE_TRAVERSAL_TIME | einen zweiten je Netzwerkknoten einstellbaren Parameter, der eine Schätzung der maximalen Bearbeitungszeit eines Paketes in einem Netzwerkknoten darstellt, |

bezeichnet ist. Dabei muss insbesondere, damit der korrekte Hopcount vorliegt, nach Erhalt erst das HopCount-Feld um eins erhöht werden. Diese Weiterbildung eignet sich besonders für drahtlose Mesh-Netzwerke.

Alternativ oder ergänzend ist es von Vorteil, das Verfahren derart weiterzubilden, dass der Wert der ersten Gültigkeitsdauer gemäß dem HWMP Protokoll durch

$$current\_time + HWMP\_ACTIVE\_ROUTE\_TIMEOUT$$

mit,

| | |
|---|---|
| current_time | die aktuelle Systemzeit, |
| HWMP_ACTIVE_ROUTE_TIMEOUT | ein je Netzwerkknoten konfigurierbarer Parameter, |

festgelegt wird. Auch hier ist eine besondere Eignung für drahtlose Mesh-Netzwerke, wie sie gemäß dem Standard IEEE802.11s bekannt sind, gegeben.

Vorzugsweise wird dabei die erste Nachricht als eine Route Request "RREQ" Nachricht gebildet, da dieser Nachrichtentyp zum Aufbau einer Reverse Route notwendig ist und alle beteiligten Netzwerkknoten erreicht.

Besonders geeignet, die erfindungsgemäßen Vorteile zu erzielen, ist es, wenn die RREQ Nachricht um ein Datenfeld für die erste Gültigkeitsdauer erweitert ist. Netzwerkknoten können dabei bei der ohnehin notwendigen Auswertung der RREQ Nachricht die minimale Lebenszeit einfach extrahieren und ggf. übernehmen. Ein sich hierdurch ergebender großer Vorteil liegt darin, dass genau einer (der Quellknoten S) die Lebenszeit für die gesamte Route vorgibt. Dadurch werden Probleme vermieden, wenn die auf den Knoten gesetzten Werte, die eigentlich alle gleich sein sollten, doch unterschiedlich groß sind.

Vorzugsweise ist dabei für das Datenfeld eine Länge von vier Oktets reserviert.

Das Datenfeld für die erste Gültigkeitsdauer in der RREQ Nachricht (rreq.lifetime) kann im Quellknoten mit einem Wert entsprechend der oben beschriebenen Gültigkeitsdauer nach dem AODV-Protokoll gesetzt werden mit

$$rreq.lifetime = 2*NET\_TRAVERSAL\_TIME$$

wobei

NET_TRAVERSAL_TIME     einen ersten je Netzwerkknoten einstellbaren Parameter, der eine Schätzung der maximalen Zeitdauer des Verschickens eines RREQ durch das Netz

darstellt. Diese Weiterbildung eignet sich besonders für drahtlose Mesh-Netzwerke.

Alternativ oder ergänzend ist es von Vorteil, das Verfahren derart weiterzubilden, dass der Wert der ersten Gültigkeitsdauer in der RREQ-Nachricht im Quellknoten gemäß dem HWMP Protokoll durch

$$rreq.lifetime = HWMP\_ACTIVE\_ROUTE\_TIMEOUT$$

mit

HWMP_ACTIVE_ROUTE_TIMEOUT einem je Netzwerkknoten konfigurierbaren Parameter,

festgelegt wird. Auch hier ist eine besondere Eignung für drahtlose Mesh-Netzwerke, wie sie gemäß dem Standard IEEE802.11s bekannt sind, gegeben.

Alternativ oder ergänzend kann der Wert der ersten Gültigkeitsdauer in der RREQ-Nachricht im Quellknoten mit einem beliebigen Wert größer als die minimal notwendige Gültigkeitsdauer gesetzt werden.

Die weiteren Netzwerkknoten, die eine RREQ-Nachricht bearbeiten, übernehmen den Wert rreq.lifetime der ersten Gültigkeit für die erste Gültigkeitsdauer der Reverse Route.

In einer weiteren vorteilhaften Ausgestaltung passen die weiteren Netzwerkknoten die erste Gültigkeitsdauer der Reverse Route entsprechend nach der obigen Formel von AODV

max (*ExistingLifetime, MinimalLifetime*)

mit

$$MinimalLifetime = (current\_time + rreq.lifetime - X*rreq.hopcount*NODE\_TRAVERSAL\_TIME)$$

mit X in {1, 2}

an, bevor sie im entsprechenden Netzwerkknoten gespeichert wird. Die erste Gültigkeitsdauer in der RREQ-Nachricht bleibt unverändert. Besonders vorteilhaft wirkt sich diese Weiterbildung bei Einsatz des AODV-Protokolls aus, wenn X=2 gesetzt ist, da dann das RREP rein theoretisch jeden Zwischenknoten bei derselben verbleibenden Lebenszeit erreicht. Mit X=1 steigt die verbleibende Lebenszeit, je näher man dem Quellknoten kommt, so dass dies bzgl. längerer Verfügbarkeit des letzten Teiles der Reverse Route von Vorteil ist.

Alternativ kann diese Anpassung durch eine Verringerung der ersten Gültigkeitsdauer in der RREQ-Nachricht erreicht werden. Sie wird entsprechend der Funktion

```
rreq.lifetime := rreq.lifetime - X * NODE_TRAVERSAL_TIME
mit X in {1, 2}
```

aktualisiert, bevor sie als erste Gültigkeitsdauer im aktuellen Netzwerkknoten abgespeichert wird. Die weitergeleitete RREQ-Nachricht enthält die aktualisierte, angepasste Lebenszeit.

Das erfindungsgemäße Verfahren vorteilhaft konkretisierende Weiterbildungen sind durch folgende Varianten für das Setzen des Wertes der Lebenszeit gegeben:

a. Setzen im (Zwischen)Knoten

i. max(ExistingLifetime, MinimalLifetime) wobei MinimalLifetime die Lebenszeit ist, die für dieses RREQ genommen werden soll

ii. Gemäß AODV: max(ExistingLifetime, MinimalLifetime) mit MinimalLifetime = (current_time + 2*NET_TRAVERSAL_TIME - 2*rreq.hopcount*NODE_TRAVERSAL_TIME)

iii. Gemäß AODV mit Verbesserung:

max(ExistingLifetime, MinimalLifetime) mit MinimalLifetime = (current_time + 2*NET_TRAVERSAL_TIME- rreq.hopcount*NODE_TRAVERSAL_TIME)

iv. Gemäß HWMP: max(ExistingLifetime, MinimalLifetime) mit MinimalLifetime = HWMP_ACTIVE_ROUTE_TIMEOUT

v. max(ExistingLifetime, MinimalLifetime) mit MinimalLifetime = rreq.lifetime

vi. max(ExistingLifetime, MinimalLifetime) mit MinimalLifetime = (current_time + rreq.lifetime - X*rreq.hopcount*NODE_TRAVERSAL_TIME) mit X = {1,2}

b. Setzen des Wertes der ersten Gültigkeitsdauer (rreq.lifetime)

i. Festen Wert setzen ähnlich wie bei AODV mit rreq.lifetime = 2*NET_TRAVERSAL_TIME (Da im Quellknoten der hopcount = 0 ist, fällt der zweite Term weg). In Zwischenknoten diesen Wert im RREQ übernehmen.

ii. Festen Wert setzen ähnlich wie bei HWMP mit rreq.lifetime = HWMP_ACTIVE_ROUTE_TIMEOUT. In Zwischenknoten diesen Wert im RREQ übernehmen.

iii. Festen Wert für rreq.lifetime setzen, der groß genug ist. In Zwischenknoten diesen Wert im RREQ übernehmen.

iv. Wie i-iii, aber in den Zwischenknoten den Wert für die Lebenszeit im RREQ mit rreq.lifetime := rreq.lifetime - X*rreq.hopcount*NODE_TRAVERSAL_TIME) mit X = {1,2} anpassen.

Hiermit wird eine technische Realisierung ermöglicht, die Lebenszeit als Zeitpunkt (hier wg. current_time) ansetzt. Alternativ oder ergänzend kann in der Routing-Tabelle die Lebenszeit als Zeitdauer angesetzt werden.

Wenn die zweite Nachricht als eine Route Reply "RREP" Nachricht gebildet wird, wird ein Implementieren der Erfindung, insbesondere in drahtlosen Mesh-Netzwerken besonders unterstützt. Dabei ist es von Vorteil, wenn seitens des Senkenknotens der Wert einer zweiten Gültigkeitsdauer der RREP Nachricht gleich dem Wert der ersten Gültigkeitsdauer gesetzt wird. Der Vorteil ist, dass Hin- und Rückroute nahezu die gleiche bzw. sehr ähnliche Lebenszeit haben.

Der erfindungsgemäße Netzwerkknoten ermöglicht die Realisierung des Verfahrens, da er Mittel zur Durchführung des erfindungsgemäßen Verfahrens aufweist, so dass hierdurch dessen Vorteile wirksam werden.

Weitere Einzelheiten sowie Vorteile der Erfindung werden anhand von Ausführungsbeispielen der Erfindung nachfolgend an Hand von Zeichnungen näher erläutert.

Dabei zeigen in schematischer Darstellung

Figur 1  als ein der Erfindung zugrunde liegendes beispielhaftes Szenario ein drahtloses Mesh-Netzwerk,

Figur 2  als Ausführungsbeispiel eine erfindungsgemäß um ein Datenfeld für die Lebenszeit erweiterte RREQ Nachricht nach dem HWMP Protokoll,

Figur 3  anhand von Routing-Tabellen dargestellten schematischen Ablauf eines Ausführungsbeispiels des erfindungsgemäßen Verfahrens,

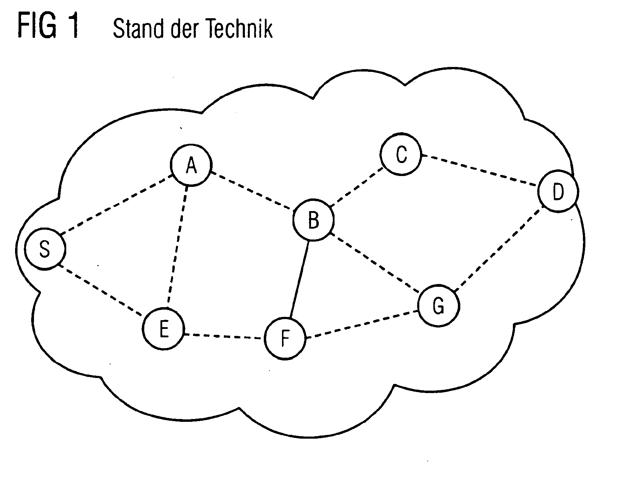

In Figur 1 ist eine beispielhafte Anordnung von Netzwerkknoten wiedergegeben, wie er in einem Netz nach dem Stand der Technik gegeben sein könnte. Die Anordnung von Netzwerkknoten gibt somit ein Szenario an, anhand dessen der erfinderische Gedankengang zur Problemfindung dargelegt werden soll.

Zu erkennen ist eine schematische Darstellung eines Netzwerks, welches beispielhaft als drahtloses Mesh-Netzwerk ausgestaltet ist. Hierfür bestehende drahtlose Verbindungen sind hierbei als punktierte Linien angedeutet.

Ferner ist ein in dem Szenario die Rolle eines Daten sendenden Quellknotens S dargestellt, der Daten zu einem Zielknoten D übertragen will.

Hierzu stehen dem Quellknoten S grundsätzlich alle in dem Netz sich zwischen dem Quellknoten S und dem Zielknoten D befindenden Netzwerkknoten A...G zur Verfügung.

Damit ein geeigneter Weg gefunden wird, erfolgt nun gemäß den Protokollen AODV und HWMP die erforderliche Routensuche mit der "Route Request" Nachricht (RREQ), die die "*reverse routes*", also rückwärts zum Quellknoten S gerichtete Routen, von allen Netzwerkknoten A...G und vom Zielknoten D zum Quellknoten S aufbaut.

Wie oben erläutert, wird der Zielknoten D ebenfalls ein oder mehrere RREQs erhalten, wobei jedes der erhaltenen RREQ-Pakete dabei für eine mögliche Route zum Quellknoten S steht.

Zielknoten D schickt auf der ausgewählten reverse route eine "Route Reply" Nachricht (RREP) per Unicast, die die so genannte "*forward route",* also die Route in Richtung Zielknoten D, in allen Netzwerkknoten A...G auf der ausgewählten Route und im Quellknoten S einträgt.

Dabei muss die Lebenszeit der durch die RREQs erzeugten reverse routes ausreichend lang sein, da sie auch noch existieren müssen, wenn das RREP an den Quellknoten S zurückgeschickt wird und der Quellknoten S mit der Übertragung der Daten an den Zielknoten D beginnt.

Gemäß dem Protokoll AODV wird die Lebenszeit der Reverse Route anhand von auf jedem Netzwerkknoten einzeln konfigurierten Konstanten berechnet. Dies geschieht wie folgt:

Jedes Mal bei Empfang einer RREQ Nachricht wird ein Eintrag bzgl. der Lifetime der reverse route einer dem Quellknoten zugeordneten IP-Adresse gemäß AODV als Maximum von
(*ExistingLifetime, MinimalLifetime*)
gesetzt, wobei gemäß AODV

$$MinimalLifetime = (current\ time + 2*NET\text{-}TRAVERSAL\text{-}TIME - 2*HopCount*NODE\text{-}TRAVERSAL\text{-}TIME)$$

definiert ist.

Dabei ist *ExistingLifetime* die Lebenszeit eines eventuell bereits existierenden Pfades zum Quellknoten S. *NET-TRA VERSAL-TIME* und *NODE-TRAVERSAL-TIME* sind Parameter, die pro Netzwerkknoten konfigurierbar sind und in jedem Knoten gesetzt sind. Besonders vorteilhaft für die Ausführung der Erfindung ist es dabei, wenn diese Werte in allen Knoten gleich sind.

Nach dem HWMP Protokoll ist die Lebenszeit der Reverse Route entsprechend eines festen, auf jedem Mesh-Netzwerkknoten einzeln zu konfigurierenden Parameters *HWMP-ACTIVE-ROUTE-TIMEOUT* gesetzt.

Für die oben genannten konfigurierbaren Parameter geben die entsprechenden Standards Default-Werte vor. Es können aber auch eigene Werte den Parametern zugewiesen werden.

Bei einem aus dem Stand der Technik bekannten Szenario, wie dem hier gewählten Beispiel, wurde erfindungsgemäß erkannt, dass auch bei Anwendung des AODV- oder HMWP sicherzustellen ist, dass alle Lebenszeiten von durch eine RREQ-Nachricht erzeugten reverse routes ausreichend lang sein müssen. Es muss vermieden werden, dass diese Lebenszeit auf irgendeinem der in Frage kommenden Netzwerkknoten A...G und D zu kurz ist, da andernfalls eine Lücke bzw. Unterbrechung in der reverse route entstehen würde.

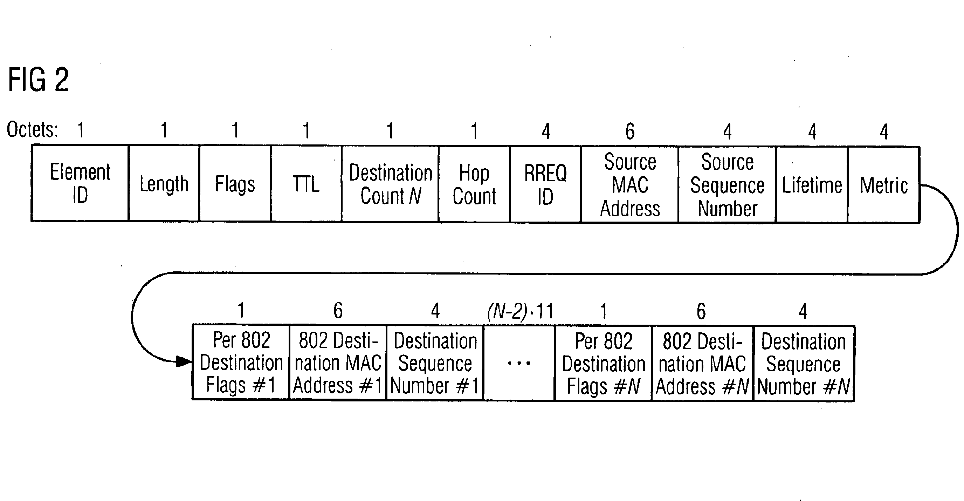

Erfindungsgemäß wird daher ein Verfahren vorgeschlagen, bei dem die Route Request Nachrichten ein Feld für die Lebenszeit der mit ihnen gesetzten Route in den Datenfeldern der RREQ Nachricht eingefügt wird, wie es in dem in Figur 2 angedeuteten Ausführungsbeispiel zu erkennen ist.

Auch Root Announcement Nachrichten, wie sie derzeit nur im HWMP Protokoll bekannt sind, sollen als ein weiteres Ausführungsbeispiel der Erfindung ein Feld für die Lebenszeit der von ihnen gesetzten Routen zum annoncierten Root-Netzwerkknoten in den Datenfeldern der Nachricht erhalten.

Dabei ist erfindungsgemäß vorgesehen, dass der Quellknoten S, der ein RREQ erzeugt, in dem erfindungsgemäßen Feld für die Lebenszeit die Zeitdauer, die die Lebenszeit der mit dieser RREQ-Nachricht erzeugten Reverse Routes zum Quellknoten S in den Routing-Tabellen der Netzwerkknoten, die das RREQ empfangen, setzt, so einträgt, dass die reverse routes mindestens solange vorhanden sind, bis eine vom Senkenknoten gesendete, die erste Netzwerknachricht bestätigende, zweite Netzwerknachricht vom Ursprungsknoten empfangen worden ist.

Der Quellknoten S kann dabei z.B. wie in AODV den Wert für die Lebenszeit im RREQ-Paket unter Berücksichtigung, dass für den Quellknoten der Wert des Parameters *hopcount* "0" ist, entsprechend der oben zum AODV Protokoll genannten Formel mit 2*NET_TRAVERSAL_TIME setzen, während gemäß HWMP der Quellknoten S den Wert für die Lebenszeit im RREQ-Paket z.B. mit dem Parameter *HWMP_ACTIVE_ROUTE_TIMEOUT* setzen kann.

Ein Netzwerkknoten, der ein RREQ-Paket empfängt, erzeugt oder aktualisiert daraufhin die Route zum Quellknoten S, der ihm durch das RREQ-Paket bekannt gemacht wurde. Wird dann eine Reverse Route zum Quellknoten S erzeugt, trägt der entsprechende Netzwerkknoten den Lebenszeitwert aus dem RREQ-Paket in das Lebenszeitfeld der Route in der Routing-Tabelle des Netzwerkknotens ein.

Existiert bereits eine Route zum Quellknoten S, so wird erfindungsgemäß das entsprechende Lebenszeitfeld in der Routing-Tabelle mit dem Maximum von in der Routing-Tabelle vorhandener Lebenszeit und der Lebenszeit aus dem RREQ-Paket gemäß der Funktion max (*ExistingLifetime, rreq.lifetime*) aktualisiert.

Der Wert der Lebenszeit aus dem RREQ-Paket sollte vorteilhafter Weise im Netzwerkknoten abgespeichert werden, damit er bei der Erneuerung der Lebenszeit der entsprechenden Route durch das Weiterleiten von Datenpaketen zur Verfügung steht.

Alternativ oder ergänzend kann der Netzwerkknoten, der die RREP-Nachricht auf den Route Request erzeugt, den Wert der Lebenszeit aus dem RREQ-Paket als Wert für die Lebenszeit im RREP-Paket verwenden. Dies ist vorteilhaft, aber nicht zwingend notwendig.

Mit der Erfindung wird sichergestellt, dass bei einem RREQ alle Netzwerkknoten mindestens die im RREQ vorgegebene Lebenszeit für die Reverse Route zum Quellknoten S verwenden.

Dadurch werden einzelne Löcher in den Routen durch sehr schnelle Timeouts der Reverse Route in einem Netzwerkknoten vermieden.

Ferner ist erfindungsgemäß die Lebenszeit der Reverse Route nur an einen bestimmten Route Request gebunden. Dadurch können unterschiedliche Route Requests unterschiedliche Lebenszeiten vorgeben. Bisher wird auf allen Netzwerkknoten derselbe Wert für die Lebenszeit konfiguriert, der dann unverändert für alle RREQs verwendet werden muss.

Unter Anwendung des erfindungsgemäßen Einfügens der Lebenszeit, wie im in Figur 2 gezeigten Beispiel, wird anhand der in Figur 1 dargestellten beispielhaften Topologie im Folgenden ein Ablauf des erfindungsgemäß realisierten Routing erläutert.

Um eine Route zu dem Zielknoten D zu ermitteln, startet der Quellknoten S einen Route Request mit dem Zielknoten D als gesuchtem Ziel und der durch einen Parameter *rreq.lifetinie* = 5 gegebenen Lebenszeit.

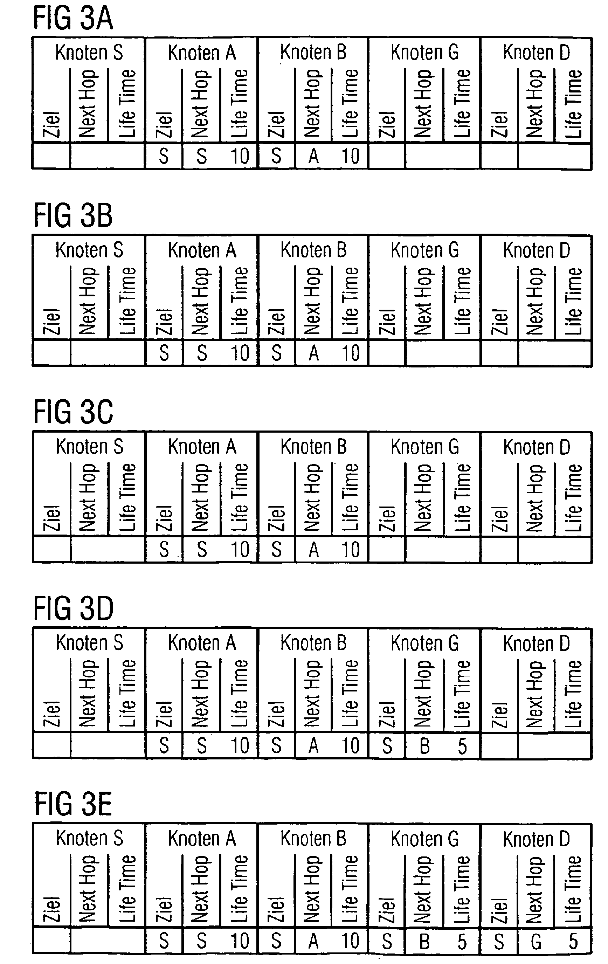

In Figur 3a sind nun Routing-Tabellen ausgewählter Mesh-Netzwerkknoten A...S vor dem RREQ dargestellt.

Hiervon ausgehend sind in Figur 3b die gleichen Netzwerkknoten nach Empfang der RREQ-Nachricht durch einen ersten Netzwerkknoten A vom Quellknoten S dargestellt. Zu erkennen ist, dass bei diesem Ausführungsbeispiel nach einem Verarbeiten der RREQ-Nachricht durch den ersten Netzwerkknoten A sich die Routing-Tabelle von A nicht ändert. Dies ergibt sich durch die Tatsache, dass die bereits existierende Lebenszeit der bereits existierenden Route zum Quellknoten S größer ist, als der durch den Parameter *rreq.lifetime* vorgegebene Wert, so dass die erfindungsgemäße Absicherung einer unbedingt notwendigen Lebensdauer auf jeden Fall gewährleistet ist.

In Figur 3c ist zu erkennen, wie sich die Tabelle darstellt, wenn ein zweiter Netzwerkknoten B die vom ersten Netzwerkknoten A weitergeleitete RREQ-Nachricht empfängt. Zu sehen ist, dass sich auch hier wie beim ersten Netzwerkknoten A nichts an der bestehenden Routing-Tabelle verändert hat, da auch hier ein Wert der Lebenszeit eingetragen war, der größer ist, als der durch den Parameter *rreq.lifetime* vorgegebene Wert.

Wie sich die Tabelle darstellt, wenn der zweite Netzwerkknoten B die RREQ-Nachricht an einen dritten Netzwerkknoten G auf dem Weg zum Zielknoten D weiterleitet, ist in Figur 3d dargestellt. Zu erkennen ist, dass nach dem Empfang der durch die vom zweiten Netzwerkknoten B weitergeleiteten RREQ-Nachricht durch den dritten Netzwerkknoten G als Ergebnis einer Auswertung der RREQ-Nachricht eine Eintragung in die Tabelle für den dritten Netzwerkknoten G erfolgt ist.

Dies ist dabei erfolgt, weil der dritte Netzwerkknoten G bis zum Zeitpunkt des Empfangs der RREQ-Nachricht keine Route zum Quellknoten S hatte. Ferner wird auch die Lebenszeit, welche der dritte Netzwerkknoten G aus der RREQ-Nachricht entnehmen konnte (rreq.lifetime = 5), in die Tabelle eingetragen, da bisher kein Wert für eine Lebenszeit enthalten war und der durch den Wert des Parameters rreq.lifetime erfindungsgemäß den minimal erforderlichen Wert der Lebenszeit enthält und vorgibt.

Zuletzt empfängt der Zielknoten D die vom dritten Netzwerkknoten G weitergeleitete RREQ-Nachricht. Da der Zielknoten D bisher auch keine Route zum Quellknoten S hat, wird eine eingetragen, wie in Figur 3e zu erkennen ist. Ferner wird analog zur Vorgehensweise beim dritten Netzwerkknoten G die Lebenszeit aus dem im RREQ-Paket enthaltenen Parameter rreq.lifetime übernommen.

Durch Anwendung des erfindungsgemäßen Verfahrens ist somit sichergestellt, dass alle Einträge für die Reverse Route zum Quellknoten S mindestens eine Lebenszeit von 5 haben, die gewährleistet, dass alle beteiligten Netzwerkknoten die Reverse Route solange vorhalten, bis die zugehörige RREP-Nachricht beim Quellknoten S eingetroffen ist.

**Patentansprüche**

1. Verfahren zum Routen von Datenpaketen in einem, insbesondere drahtlosen aus einer Vielzahl von Netzwerkknoten (A...S) gebildeten Kommunikationsnetz, bei dem

a) zur Übertragung von Datenpaketen von einem als Ursprung der Datenpakete fungierenden ersten Netzwerkknoten (S) zu einem als Senke der Datenpakete fungierenden zweiten Netzwerkknoten (D) die Datenpakete unter Zuhilfenahme mindestens eines weiteren zum Ursprungaknoten disjunkten Netzwerkknotens (A, B, G, D) des Kommunikationsnetzes übermittelt werden,

b) ausgehend vom Ursprungsknoten zumindest an den weiteren Netzwerkknoten eine erste Netzwerknachricht derart übermittelt wird, dass sie jedem weiteren Netzwerkknoten sukzessiv weitergeleitet wird, bis der weitere Netzwerkknoten dem Senkenknoten (D) entspricht, wobei die erste Netzwerknachricht einen ihr zugeordneten Wert einer ersten Gültigkeitsdauer enthält,

c) der jeweilige weitere Netzwerkknoten auf Grundlage der ersten Nachricht eine Routeninformation derart vorhält, dass eine erste Information über einen nächsten Netzwerkknoten auf dem Weg zum Ursprungsknoten sowie der Wert der ersten Gültigkeitsdauer im aktuellen weiteren Netzwerkknoten temporär gespeichert wird,

d) der Wert der jeweiligen ersten Gültigkeitsdauer, derart abgespeichert wird, dass alle ersten Informationen zumindest so lange abgespeichert bleiben, bis eine vom Senkenknoten gesendete die erste Netzwerknachricht bestätigende zweite Netzwerknachricht vom Ursprungsknoten empfangen worden ist.

2. Verfahren nach Anspruch 1, **dadurch gekennzeichnet, dass** der Wert der ersten Gültigkeitsdauer derart abgespeichert wird, dass dies nur dann unterbleibt, wenn bereits ein größerer Wert im aktuellen Netzwerkknoten abgespeichert ist.

3. verfahren nach dem vorhergehenden Anspruch, **dadurch gekennzeichnet, dass** das Abspeichern derart erfolgt, dass der abzuspeichernde Wert durch die Funktion max (*ExistingLifetime, MinimalLiftime*) ermittelt wird, mit

> *ExistingLifetime*    die Lebenszeit einer bereits existierenden Route zum Ursprungsknoten,
> *MinimalLifetime*    eine Schätzung der mindestens zu setzenden Lebenszeit,

bezeichnet ist.

4. Verfahren nach einem der Ansprüche 1 bis 3, **dadurch gekennzeichnet, dass** das Abspeichern derart erfolgt, dass der abzuspeichernde Wert gemäß dem AODV Protokoll durch die Funktion,
max (*ExistingLifetime, MinimalLifetime*)
mit

$$MinimalLifetime = (current\_time + 2*NET\_TRAVERSAL\_TIME -$$

$$2*HopCount*NODE\_TRAVERSAL\_TIME)$$

ermittelt wird, wobei mit

| | |
|---|---|
| *ExistingLifetime* | die Lebenszeit einer bereits existierenden Route zum Ursprungsknoten, |
| *MinimalLifetime* | eine Schätzung der mindestens zu setzenden Lebenszeit, |
| *current_time* | die aktuelle Systemzeit, |
| NET_TRAVERSAL_TIME | einen ersten je Netzwerkknoten einstellbaren Parameter, der eine Schätzung der maximalen Zeitdauer des Verschickens eines RREQ durch das Netz darstellt, |
| HopCount | die Anzahl der durchlaufenen weiteren Netzwerkknoten des RREQ-Paketes bis zum einschließlich aktuellen Netzwerk- |
| NODE_TRAVERSAL_TIME | knoten, die dem aktualisierten Feld rreq.hopcount des RREQ entnommen werden kann, einen zweiten je Netzwerkknoten einstellbaren Parameter, der eine Schätzung der maximalen Bearbeitungszeit eines Paketes in einem Netzwerkknoten darstellt, |

bezeichnet ist.

5. Verfahren nach einem der Ansprüche 1 bis 3, **dadurch gekennzeichnet, dass** das Abspeichern derart erfolgt, dass der abzuspeichernde Wert gemäß einer Verbesserung des AODV Protokolls durch die Funktion,
max (*ExistingLifetime, MinimalLifetime*)

mit

$$MinimalLifetime = (current\_time + 2*NET\_TRAVERSAL\_TIME -$$

$$HopCount*NODE\_TRAVERSAL\_TIME)$$

ermittelt wird, wobei mit

| | |
|---|---|
| *ExistingLifetime* | die Lebenszeit einer bereits existierenden Route zum Ursprungsknoten, |
| *MinimalLifetime* | eine Schätzung der mindestens zu setzenden Lebenszeit, |
| *current_time* | die aktuelle Systemzeit, |
| NET_TRAVERSAL_TIME | einen ersten je Netzwerkknoten einstellbaren Parameter, der eine Schätzung der maximalen Zeitdauer des Verschickens eines RREQ durch das Netz darstellt, |
| HopCount | die Anzahl der durchlaufenen weiteren Netzwerkknoten des RREQ-Paketes bis zum einschließlich aktuellen Netzwerkknoten, die dem aktualisierten |
| NODE_TRAVERSAL_TIME | Feld rreq.hopcount des RREQ entnommen werden kann, einen zweiten je Netzwerkknoten einstellbaren Parameter, der eine Schätzung der maximalen Bearbeitungszeit eines Paketes in einem Netzwerkknoten darstellt, |

bezeichnet ist.

**6.** Verfahren nach einem der Ansprüche 1 bis 3, **dadurch gekennzeichnet, dass** das Abspeichern derart erfolgt, dass der abzuspeichernde Wert gemäß dem HWMP Protokoll durch die Funktion, max (*ExistingLifetime, MinimalLifetime*) mit

$$MinimalLifetime = HWMP\_ACTIVE\_ROUTE\_TIMEOUT$$

ermittelt wird, wobei mit

| | |
|---|---|
| *ExistingLifetime* | die Lebenszeit einer bereits existierenden Route zum Ursprungsknoten, |
| *MinimalLifetime* | eine Schätzung der mindestens zu setzenden Lebenszeit, |
| HWMP_ACTIVE_ROUTE_TIMEOUT | ein je Netzwerkknoten konfigurierbarer Parameter, |

bezeichnet ist.

**7.** Verfahren nach dem vorhergehenden Anspruch, **dadurch gekennzeichnet, dass** das Abspeichern derart erfolgt, dass der abzuspeichernde Wert durch die Funktion max (*ExistingLifetime, MinimalLiftime*) mit

$$MinimalLiftime = rreq.lifetime$$

ermittelt wird, wobei mit

| | |
|---|---|
| *ExistingLifetime* | die Lebenszeit einer bereits existierenden Route zum Ursprungsknoten, |
| *MinimalLifetime* | eine mindestens zu setzenden Lebenszeit, |
| *rreq.lifetime* | der Wert der ersten Gültigkeitsdauer, |

bezeichnet ist.

**8.** Verfahren nach einem der Ansprüche 1 bis 3, **dadurch gekennzeichnet, dass** das Abspeichern derart erfolgt, dass der abzuspeichernde Wert gemäß dem HWMP Protokoll durch die Funktion, max (*ExistingLifetime, MinimalLifetime*) mit

```
MinimalLifetime =              (current_time + rreq.lifetime -
                               X*rreq.hopcount*NODE_TRAVERSAL_
                               TIME)
```

und

```
                    X =              {1,2}
```

ermittelt wird, wobei mit

| | |
|---|---|
| NODE_TRAVERSAL_TIME | einen zweiten je Netzwerkknoten einstellbaren Parameter, der eine Schätzung der maximalen Bearbeitungszeit eines Paketes in einem Netzwerkknoten darstellt, |
| *ExistingLifetime* | die Lebenszeit einer bereits existierenden Route zum Ursprungsknoten, |
| *MinimalLifetime* | eine mindestens zu setzenden Lebenszeit, |
| *rreq.lifetime* | der Wert der ersten Gültigkeitsdauer, |
| *current_time* | die aktuelle Systemzeit, |
| *rreq.hopcount* | die Anzahl der durchlaufenen weiteren Netzwerkknoten des RREQ-Paketes bis zum einschließlich aktuellen Netzwerkknoten, die dem aktualisierten Feld rreq.hopcount des RREQ entnommen werden kann, |

bezeichnet ist.

9. Verfahren nach einem der vorhergehenden Ansprüche, **dadurch gekennzeichnet, dass** der Wert der ersten Gültigkeitsdauer dynamisch generiert wird,

> i. festen Wert für rreq.lifetime setzen, der groß genug ist, in Zwischenknoten diesen Wert im RREQ einfach übernehmen,
> ii. wie i, aber in den Zwischenknoten den Wert für die Lebenszeit im RREQ mit rreq.lifetime := rreq.lifetime - X*rreq.hopcount*NODE_TRAVERSAL_TIME) mit X = {1,2} anpassen.

10. Verfahren nach Anspruch 8, **dadurch gekennzeichnet, dass** der Wert der ersten Gültigkeitsdauer durch

$$rreq.lifetime = 2*NET\_TRAVERSAL\_TIME$$

bestimmt wird, wobei mit

| | |
|---|---|
| *rreq.lifetime* | der Wert der ersten Gültigkeitsdauer, |
| NET_TRAVERSAL_TIME | NET_TRAVERSAL_TIME einen ersten je Netzwerkknoten einstellbaren Parameter, der eine Schätzung der maximalen Zeitdauer des Verschickens eines RREQ durch das Netz darstellt, |

bezeichnet ist.

11. Verfahren nach Anspruch 8, **dadurch gekennzeichnet, dass** der Wert der ersten Gültigkeitsdauer durch

$$rreq.lifetime = HWMP\_ACTIVE\_ROUTE\_TIMEOUT$$

bestimmt wird, wobei mit

| | |
|---|---|
| *rreq.lifetime* | der Wert der ersten Gültigkeitsdauer, |

(fortgesetzt)

HWMP_ACTIVE_ROUTE_TIMEOUT ein je.Netzwerkknoten konfigurierbarer Parameter,

bezeichnet ist.

12. Verfahren nach einem der vorhergehenden Ansprüche, **dadurch gekennzeichnet, dass** der Wert der ersten Gültigkeitsdauer durch

```
rreq.lifetime :=            rreq.lifetime –
                            X*rreq.hopcount*NODE_TRAVERSAL_
                            TIME)
```

und X = {1,2}
bestimmt wird, wobei mit

| | |
|---|---|
| *rreq.lifetime* | der Wert der ersten Gültigkeitsdauer, |
| *rreq.hopcount* | die Anzahl der durchlaufenen weiteren Netzwerkknoten des RREQ-Paketes bis zum einschließlich aktuellen Netzwerkknoten, die dem aktualisierten Feld rreq.hopcount des RREQ entnommen werden kann, |
| NODE_TRAVERSAL_TIME | einen zweiten je Netzwerkknoten einstellbaren Parameter, der eine Schätzung der maximalen Bearbeitungszeit eines Paketes in einem Netzwerkknoten darstellt, |

bezeichnet ist.

13. Verfahren nach einem der vorhergehenden Ansprüche, **dadurch gekennzeichnet, dass** die erste Nachricht als eine Route Request "RREQ" Nachricht gebildet wird.

14. Verfahren nach einem der vorhergehenden Ansprüche, **dadurch gekennzeichnet, dass** die RREQ Nachricht um ein Datenfeld für die erste Gültigkeitsdauer erweitert ist.

15. Verfahren nach dem vorhergehenden Anspruch, **dadurch gekennzeichnet, dass** für das Datenfeld eine Länge von vier Oktets reserviert ist.

16. Verfahren nach einem der vorhergehenden Ansprüche, **dadurch gekennzeichnet, dass** die zweite Nachricht als eine Route Reply "RREP" Nachricht gebildet wird.

17. Verfahren nach einem der vorhergehenden Ansprüche, **dadurch gekennzeichnet, dass** seitens des Senkenknotens (D) der Wert einer zweiten Gültigkeitsdauer der RREP Nachricht gleich dem Wert der ersten Gültigkeitsdauer gesetzt wird.

18. Netzwerkknoten zum Routen von Datenpaketen in Kommunikationsnetzen, **gekennzeichnet durch** Mittel zur Durchführung des Verfahrens nach einem der vorhergehenden Ansprüche.

**Claims**

1. Method for routing data packets in an, in particular wireless, communication network formed from a plurality of network nodes (A...S), wherein

a) in order to transmit data packets from a first network node (S) acting as a source of the data packets to a second network node (D) acting as a sink of the data packets, the data packets are transmitted with the assistance of at least one further network node (A, B, G, D) of the communication network that is disjoint with respect to the source node,
b) starting from the source node, a first network message is transmitted at least to the further network node such that it is forwarded successively to each further network node until the further network node corresponds to the sink node (D), wherein the first network message contains a value of a first validity period assigned to it,

c) the respective further network node makes route information available on the basis of the first message such that a first item of information about a next network node on the path to the source node and the value of the first validity period are temporarily stored in the current further network node,

d) the value of the respective first validity period is stored such that all first items of information remain stored at least until a second network message sent by the sink node and acknowledging the first network message has been received by the source node.

2. Method according to claim 1, **characterised in that** the value of the first validity period is stored such that this does not take place only if a greater value is already stored in the current network node.

3. Method according to the preceding claim, **characterised in that** the storing is carried out in such a way that the value to be stored is determined by means of the function

max (*ExistingLifetime, MinimalLifetime*)

where

         *ExistingLifetime*    is the lifetime of an already existing route to the source node, and
         *MinimalLifetime*    is an estimate of the lifetime that is to be set as a minimum.

4. Method according to one of claims 1 to 3, **characterised in that** the storing is carried out in such a way that the value to be stored is determined in accordance with the AODV protocol by means of the function,

max (*ExistingLifetime, MinimalLifetime*)

where

$$MinimalLifetime = (current\_time + 2*NET\_TRAVERSAL\_TIME - 2*HopCount*NODE\_TRAVERSAL\_TIME)$$

where

| | |
|---|---|
| *ExistingLifetime* | is the lifetime of an already existing route to the source node, |
| *MinimalLifetime* | is an estimate of the lifetime that is to be set as a minimum, |
| *current_time* | is the current system time, |
| NET_TRAVERSAL_TIME | is a first parameter which can be set for each network node and which represents an estimate of the maximum time taken to send an RREQ through the network, |
| HopCount | is the number of further network nodes traversed by the RREQ packet up to and including the current network node, which number can be taken from the updated rreq.hopcount field of the RREQ, |
| NODE_TRAVERSAL_TIME | is a second parameter which can be set for each network node and which represents an estimate of the maximum processing time of a packet in a network node. |

5. Method according to one of claims 1 to 3, **characterised in that** the storing is carried out in such a way that the value to be stored is determined in accordance with an improvement of the AODV protocol by means of the function,

max (*ExistingLifetime, MinimalLifetime*)

where

$$MinimalLifetime = (current\_time + 2*NET\_TRAVERSAL\_TIME - HopCount*NODE\_TRAVERSAL\_TIME)$$

where

| | |
|---|---|
| *ExistingLifetime* | is the lifetime of an already existing route to the source node, |
| *MinimalLifetime* | is an estimate of the lifetime that is to be set as a minimum, |
| *current_time* | is the current system time, |
| NET_TRAVERSAL_TIME | is a first parameter which can be set for each network node and which represents an estimate of the maximum time taken to send an RREQ through the network, |
| HopCount | is the number of further network nodes traversed by the RREQ packet up to and including the current network node, which number can be taken from the updated rreq.hopcount field of the RREQ, |
| NODE_TRAVERSAL_TIME | is a second parameter which can be set for each network node and which represents an estimate of the maximum processing time of a packet in a network node. |

6. Method according to one of claims 1 to 3, **characterised in that** the storing is carried out in such a way that the value to be stored is determined in accordance with the HWMP protocol by means of the function, max (*ExistingLifetime, MinimalLifetime*)
where

$$MinimalLifetime = \texttt{HWMP\_ACTIVE\_ROUTE\_TIMEOUT}$$

where

| | |
|---|---|
| *ExistingLifetime* | is the lifetime of an already existing route to the source node, |
| *MinimalLifetime* | is an estimate of the lifetime that is to be set as a minimum, and |
| HWMP_ACTIVE_ROUTE_TIMEOUT | is a parameter which can be configured for each network node. |

7. Method according to the preceding claim, **characterised in that** the storing is carried out in such a way that the value to be stored is determined by means of the function
max (*ExistingLifetime, MinimalLifetime*)
where

$$MinimalLifetime = \texttt{rreq.lifetime}$$

where

| | |
|---|---|
| *ExistingLifetime* | is the lifetime of an already existing route to the source node, |
| *MinimalLifetime* | is a lifetime that is to be set as a minimum, and |
| *rreq.lifetime* | is the value of the first validity period. |

8. Method according to one of claims 1 to 3, **characterised in that** the storing is carried out in such a way that the value to be stored is determined in accordance with the HWMP protocol by means of the function,
max (*ExistingLifetime, MinimalLifetime*)
where

```
MinimalLifetime =            (current_time + rreq.lifetime -
                             X*rreq.hopcount*NODE_TRAVERSAL_
                             TIME)
```

and

$$X = \{1,2\}$$

where

| | |
|---|---|
| NODE_TRAVERSAL_TIME | is a second parameter which can be set for each network node and which represents an estimate of the maximum processing time of a packet in a network node, |
| *ExistingLifetime* | is the lifetime of an already existing route to the source node, |
| *MinimalLifetime* | is a lifetime that is to be set as a minimum, |
| *rreq.lifetime* | is the value of the first validity period, |
| *current_time* | is the current system time, and |
| *rreq.hopcount* | is the number of further network nodes traversed by the RREQ packet up to and including the current network node, which number can be taken from the updated rreq.hopcount field of the RREQ. |

9.  Method according to one of the preceding claims,
    **characterised in that** the value of the first validity period is generated dynamically,

    i. set fixed value for rreq.lifetime that is large enough; simply take over this value in the RREQ in intermediate nodes,
    ii. same as i, except that in the intermediate nodes adjust the value for the lifetime in the RREQ with rreq.lifetime := rreq.lifetime - X*rreq.hopcount*NODE_TRAVERSAL_TIME) where X = {1,2}.

10. Method according to claim 8, **characterised in that** the value of the first validity period is determined by

```
rreq.lifetime = 2*NET_TRAVERSAL_TIME
```

where

| | |
|---|---|
| *rreq.lifetime* | is the value of the first validity period, and |
| NET_TRAVERSAL_TIME | is a first parameter which can be set for each network node and which represents an estimate of the maximum time taken to send an RREQ through the network. |

11. Method according to claim 8, **characterised in that** the value of the first validity period is determined by

```
rreq.lifetime = HWMP_ACTIVE_ROUTE_TIMEOUT
```

where

| | |
|---|---|
| *rreq.lifetime* | is the value of the first validity period, and |
| HWMP_ACTIVE_ROUTE_TIMEOUT | is a parameter which can be configured for each network node. |

**12.** Method according to one of the preceding claims,
**characterised in that** the value of the first validity period is determined by

```
rreq.lifetime :=            rreq.lifetime -
                            X*rreq.hopcount*NODE_TRAVERSAL
                            _TIME)
```

and X = {1,2}
where

| | |
|---|---|
| *rreq.lifetime* | is the value of the first validity period, |
| *rreq.hopcount* | is the number of further network nodes traversed by the RREQ packet up to and including the current network node, which number can be taken from the updated rreq.hopcount field of the RREQ, and |
| NODE_TRAVERSAL_TIME | is a second parameter which can be set for each network node and which represents an estimate of the maximum processing time of a packet in a network node. |

**13.** Method according to one of the preceding claims,
**characterised in that** the first message is formed as a route request "RREQ" message.

**14.** Method according to one of the preceding claims,
**characterised in that** the RREQ message is extended by a data field for the first validity period.

**15.** Method according to the preceding claim, **characterised
in that** a length of four octets is reserved for the data field.

**16.** Method according to one of the preceding claims,
**characterised in that** the second message is formed as a route reply "RREP" message.

**17.** Method according to one of the preceding claims,
**characterised in that** the value of a second validity period of the RREP message is set equal to the value of the first validity period on the part of the sink node (D).

**18.** Network node for routing data packets in communication networks, **characterised by** means for carrying out the method according to one of the preceding claims.


**Revendications**

**1.** Procédé destiné à acheminer des paquets de données dans un réseau de communication, notamment sans fil, formé à partir d'une pluralité de noeuds de réseau (A ... S), dans lequel

a) pour la transmission de paquets de données d'un premier noeud de réseau (S), agissant en tant qu'origine des paquets de données, vers un second noeud de réseau (D) agissant en tant que collecteur des paquets de données, les paquets de données sont transmis à l'aide d'au moins un noeud de réseau supplémentaire (A, B, C, D) disjoint par rapport au noeud d'origine,
b) partant du noeud d'origine, un premier message de réseau est transmis au moins au noeud de réseau supplémentaire de manière à ce qu'il soit transféré successivement à chaque noeud de réseau supplémentaire, jusqu'à ce que le noeud de réseau supplémentaire corresponde au noeud collecteur (D), le premier message de réseau contenant une valeur, qui lui est attribuée, d'une première durée de validité,
c) le noeud de réseau respectivement supplémentaire présentant une information d'acheminement sur la base du premier message, de telle manière qu'une première information concernant un noeud de réseau suivant est mémorisée temporairement sur le chemin vers le noeud d'origine ainsi que la valeur de la première durée de validité dans le noeud de réseau supplémentaire actuel,

d) la valeur de la première durée de validité respective est mémorisée de telle manière que toutes les premières informations restent mémorisées au moins jusqu'à ce qu'un second message de réseau émis par le noeud collecteur et confirmant le premier message de réseau ait été reçu par le noeud d'origine.

**2.** Procédé selon la revendication 1, **caractérisé en ce que** la valeur de la première durée de validité est mémorisée de manière à ce que ceci n'ait lieu seulement lorsqu'une valeur plus grande a déjà été mémorisée dans le noeud de réseau actuel.

**3.** Procédé selon la revendication précédente, **caractérisé en ce que** la mémorisation est réalisée de manière à ce que la valeur à mémoriser soit déterminée par la fonction max (*ExistingLifetime,* MinimalLifetime),

*ExistingLifetime*    désignant la durée de vie d'une voie d'acheminement déjà existante vers le noeud d'origine,
*MinimalLifetime*    désignant une estimation de la durée de vie à mettre au minimum.

**4.** Procédé selon l'une quelconque des revendications 1 à 3, **caractérisé en ce que** la mémorisation est réalisée de manière à ce que la valeur à mémoriser soit déterminée selon le protocole AODV par la fonction max (*ExistingLifetime, MinimalLifetime*)
avec

$$MinimalLifetime = (current\_time\ +\ 2*NET\_TRAVERSAL\_TIME\ -$$
$$2*HopCount*NODE\_TRAVERSAL\_TIME)$$

| | |
|---|---|
| *ExistingLifetime* | désignant la durée de vie d'une voie d'acheminement déjà existante vers le noeud d'origine, |
| *MinimalLifetime* | désignant une estimation de la durée de vie à mettre au minimum, |
| current_time | désignant le temps du système actuel, |
| NET_TRAVERSAL_TIME | désignant un premier paramètre réglable par noeud de réseau, qui représente une estimation de la durée maximale de l'émission d'un RREQ à travers le réseau, |
| HopCount | désignant le nombre de noeuds de réseau supplémentaires traversés du paquet RREQ, jusqu'au noeud de réseau actuel compris, qui peut être conclu du champ actualisé rreq.hopcount du RREQ, |
| NODE_TRAVERSAL_TIME | désignant un second paramètre réglable par noeud de réseau, qui représente une estimation du temps de gestion maximal d'un paquet dans un noeud de réseau. |

**5.** Procédé selon l'une quelconque des revendications 1 à 3, **caractérisé en ce que** la mémorisation est réalisée de manière à ce que la valeur à mémoriser soit déterminée selon une amélioration du protocole AODV par la fonction max (*ExistingLifetime, MinimalLifetime*)
avec

$$MinimalLifetime = (current\_time\ +\ 2*NET\_TRAVERSAL\_TIME\ -$$
$$HopCount*NODE\_TRAVERSAL\_TIME)$$

| | |
|---|---|
| *ExistingLifetime* | désignant la durée de vie d'une voie d'acheminement déjà existante vers le noeud d'origine, |
| *MinimalLifetime* | désignant une estimation de la durée de vie à mettre au minimum, |
| current_time | désignant le temps du système actuel, |

(suite)

| NET_TRAVERSAL_TIME | désignant un premier paramètre réglable par noeud de réseau, qui représente une estimation de la durée maximale de l'émission d'un RREQ à travers le réseau, |
|---|---|
| HopCount | désignant le nombre de noeuds de réseau supplémentaires traversés du paquet RREQ, jusqu'au noeud de réseau actuel compris, qui peut être conclu du champ actualisé rreq.hopcount du RREQ, |
| NODE_TRAVERSAL_TIME | désignant un second paramètre réglable par noeud de réseau, qui représente une estimation du temps de gestion maximal d'un paquet dans un noeud de réseau. |

**6.** Procédé selon l'une quelconque des revendications 1 à 3, **caractérisé en ce que** la mémorisation est réalisée de manière à ce que la valeur à mémoriser soit déterminée selon le protocole HWMP par la fonction
max (*ExistingLifetime, MinimalLifetime*)
avec

$$MinimalLifetime = \text{HWMP\_ACTIVE\_ROUTE\_TIMEOUT}$$

| *ExistingLifetime* | désignant la durée de vie d'une voie d'acheminement déjà existante vers le noeud d'origine, |
|---|---|
| *MinimalLifetime* | désignant une estimation de la durée de vie à mettre au minimum, |
| HWMP_ACTIVE_ROUTE_TIMEOUT | désignant un paramètre configurable par noeud de réseau. |

**7.** Procédé selon l'une quelconque des revendications précédentes, **caractérisé en ce que** la mémorisation est réalisée de manière à ce que la valeur à mémoriser soit déterminée par la fonction
max (*ExistingLifetime, MinimalLifetime*)
avec

$$MinimalLifetime = \text{rreq. lifetime}$$

| *ExistingLifetime* | désignant la durée de vie d'une voie d'acheminement déjà existante vers le noeud d'origine, |
|---|---|
| *MinimalLifetime* | désignant une durée de vie à mettre au minimum, |
| *rreq. lifetime* | désignant la valeur de la première durée de validité. |

**8.** Procédé selon l'une quelconque des revendications 1 à 3, **caractérisé en ce que** la mémorisation est réalisée de manière à ce que la valeur à mémoriser soit déterminée selon le protocole HWMP par la fonction
max (*ExistingLifetime, MinimalLifetime*)
avec

```
MinimalLifetime =        (current_time  +  rreq.lifetime -
                         X*rreq.hopcount*NODE_TRAVERSAL_
                         TIME)
```

et

$$X = \{1, 2\},$$

| | |
|---|---|
| NODE_TRAVERSAL_TIME | désignant un second paramètre réglable par noeud de réseau, qui représente une estimation du temps de gestion maximal d'un paquet dans un noeud de réseau, |
| *ExistingLifetime* | désignant la durée de vie d'une voie d'acheminement déjà existante vers le noeud d'origine, |
| *MinimalLifetime* | désignant une durée de vie à mettre au minimum, |
| *rreq. lifetime* | désignant la valeur de la première durée de validité, |
| current_time | désignant le temps du système actuel, |
| rreq.hopcount | désignant le nombre de noeuds de réseau supplémentaires traversés du paquet RREQ, jusqu'au noeud de réseau actuel compris, qui peut être conclu du champ actualisé rreq.hopcount du RREQ. |

**9.** Procédé selon l'une quelconque des revendications précédentes, **caractérisé en ce que** la valeur de la première durée de validité est générée de manière dynamique,

    i. mettre une valeur fixe pour rreq.lifetime, qui soit suffisamment grande pour, dans des noeuds intermédiaires, prendre en compte cette valeur simplement dans le RREQ,
    ii. comme i, mais dans les noeuds intermédiaires, adapter la valeur pour la durée de vie dans le RREQ avec

```
rreq.lifetime :      =      rreq.lifetime      –
X*rreq.hopcount*NODE_TRAVERSAL_TIME) avec X = {1, 2}.
```

**10.** Procédé selon la revendication 8, **caractérisé en ce que** la valeur de la première durée de validité est déterminée par

$$rreq.lifetime = 2*NET\_TRAVERSAL\_TIME,$$

| | |
|---|---|
| *rreq. lifetime* | désignant la valeur de la première durée de validité, |
| NET_TRAVERSAL_TIME | désignant un premier paramètre réglable par noeud de réseau, qui représente une estimation de la durée maximale d'émission d'un RREQ à travers le réseau. |

**11.** Procédé selon la revendication 8, **caractérisé en ce que** la valeur de la première durée de validité est déterminée par

$$rreq.lifetime = HWMP\_ACTIVE\_ROUTE\_TIMEOUT,$$

| | |
|---|---|
| *rreq.lifetime* | désignant la valeur de la première durée de validité, |
| HWMP_ACTIVE_ROUTE_TIMEOUT désignant | un paramètre configurable par noeud de réseau. |

**12.** Procédé selon l'une quelconque des revendications précédentes, **caractérisé en ce que** la valeur de la première durée de validité est déterminée par

```
rreq.lifetime : =        rreq.lifetime -
                         X*rreq.hopcount*NODE_TRAVERSAL_
                         TIME
```

et X = {1, 2},

| | |
|---|---|
| *rreq.lifetime* | désignant la valeur de la première durée de validité, |
| rreq.hopcount | désignant le nombre de noeuds de réseau supplémentaires traversés du paquet RREQ, jusqu'au noeud de réseau actuel compris, qui peut être conclu du champ actualisé rreq.hopcount du RREQ, |
| NODE_TRAVERSAL_TIME | désignant un second paramètre réglable par noeud de réseau, qui représente une estimation du temps de gestion maximal d'un paquet dans un noeud de réseau. |

13. Procédé selon l'une quelconque des revendications précédentes, **caractérisé en ce que** le premier message est formé comme un message Route Request « RREQ ».

14. Procédé selon l'une quelconque des revendications précédentes, **caractérisé en ce que** le message RREQ est élargi d'un champ de données pour la première durée de validité.

15. Procédé selon l'une quelconque des revendications précédentes, **caractérisé en ce qu'**une longueur de quatre octets est réservée pour le champ de données.

16. Procédé selon l'une quelconque des revendications précédentes, **caractérisé en ce que** le second message est formé comme un message Route Reply « RREP ».

17. Procédé selon l'une quelconque des revendications précédentes, **caractérisé en ce que** du côté du noeud collecteur (D) la valeur d'une seconde durée de validité du message RREP égale à la valeur de la première durée de validité est mise.

18. Noeud de réseau destiné à acheminer des paquets de données dans des réseaux de communication, **caractérisé par** des moyens pour la réalisation du procédé selon l'une quelconque des revendications précédentes.

# FIG 1    Stand der Technik

## FIG 2

EP 2 055 056 B1

| Octets: 1 | 1 | 1 | 1 | 1 | 1 | 4 | 6 | 4 | 4 | 4 |
|---|---|---|---|---|---|---|---|---|---|---|
| Element ID | Length | Flags | TTL | Destination Count *N* | Hop Count | RREQ ID | Source MAC Address | Source Sequence Number | Lifetime | Metric |

| 1 | 6 | 4 | *(N-2)*·11 | 1 | 6 | 4 |
|---|---|---|---|---|---|---|
| Per 802 Destination Flags #1 | 802 Destination MAC Address #1 | Destination Sequence Number #1 | · · · | Per 802 Destination Flags #*N* | 802 Destination MAC Address #*N* | Destination Sequence Number #*N* |

## FIG 3A

| Knoten S | | | Knoten A | | | Knoten B | | | Knoten G | | | Knoten D | | |
|---|---|---|---|---|---|---|---|---|---|---|---|---|---|---|
| Ziel | Next Hop | Life Time | Ziel | Next Hop | Life Time | Ziel | Next Hop | Life Time | Ziel | Next Hop | Life Time | Ziel | Next Hop | Life Time |
| | | | S | S | 10 | S | A | 10 | | | | | | |

## FIG 3B

| Knoten S | | | Knoten A | | | Knoten B | | | Knoten G | | | Knoten D | | |
|---|---|---|---|---|---|---|---|---|---|---|---|---|---|---|
| Ziel | Next Hop | Life Time | Ziel | Next Hop | Life Time | Ziel | Next Hop | Life Time | Ziel | Next Hop | Life Time | Ziel | Next Hop | Life Time |
| | | | S | S | 10 | S | A | 10 | | | | | | |

## FIG 3C

| Knoten S | | | Knoten A | | | Knoten B | | | Knoten G | | | Knoten D | | |
|---|---|---|---|---|---|---|---|---|---|---|---|---|---|---|
| Ziel | Next Hop | Life Time | Ziel | Next Hop | Life Time | Ziel | Next Hop | Life Time | Ziel | Next Hop | Life Time | Ziel | Next Hop | Life Time |
| | | | S | S | 10 | S | A | 10 | | | | | | |

## FIG 3D

| Knoten S | | | Knoten A | | | Knoten B | | | Knoten G | | | Knoten D | | |
|---|---|---|---|---|---|---|---|---|---|---|---|---|---|---|
| Ziel | Next Hop | Life Time | Ziel | Next Hop | Life Time | Ziel | Next Hop | Life Time | Ziel | Next Hop | Life Time | Ziel | Next Hop | Life Time |
| | | | S | S | 10 | S | A | 10 | S | B | 5 | | | |

## FIG 3E

| Knoten S | | | Knoten A | | | Knoten B | | | Knoten G | | | Knoten D | | |
|---|---|---|---|---|---|---|---|---|---|---|---|---|---|---|
| Ziel | Next Hop | Life Time | Ziel | Next Hop | Life Time | Ziel | Next Hop | Life Time | Ziel | Next Hop | Life Time | Ziel | Next Hop | Life Time |
| | | | S | S | 10 | S | A | 10 | S | B | 5 | S | G | 5 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005094594 A1
- WO 2005091576 A

- WO 2005062554 A

**In der Beschreibung aufgeführte Nicht-Patentliteratur**

- **Perkins, C. E. ; Belding-Royer, E. M. ; Das, S. R.** Ad hoc On-Demand Distance Vector (AODV) Routing. *IETF Experimental RFC 3561,* Juli 2003